# EUROPÄISCHE PATENTANMELDUNG

(11) **EP 1 927 788 A1**
(43) Veröffentlichungstag der Anmeldung: **04.06.2008**
(21) Anmeldenummer: 06024950.5
(22) Anmeldetag: 01.12.2006
(51) Int. Cl.: F16H 47/04

(54) **Getriebevorrichtung mit Hydromotoren und Planetengetriebe**

(71) Anmelder: NAF Neunkirchener Achsenfabrik AG, 91077 Neunkirchen (DE)
(72) Erfinder: Die Erfindernennung liegt noch nicht vor
(74) Vertreter: Patentanwälte Hofstetter, Schurack & Skora

(57) **Zusammenfassung**

Die Erfindung betrifft eine Getriebevorrichtung (100, 200, 300) für ein Fahrzeug, insbesondere ein Landfahrzeug, eine selbstfahrende Arbeitsmaschine oder dergleichen, mit einem Planetengetriebe (10), welches zumindest folgende Elemente umfasst:
- ein Sonnenrad (12), welches über eine erste Eingangswelle (26a) mit einem ersten Hydromotor (28a) koppelbar ist;
- einen Steg (14), welcher mit einer Abtriebswelle (20) gekoppelt ist;
- zumindest ein mit dem Sonnenrad (12) in Wirkverbindung stehendes Planetenrad (16), welches mit dem Steg (14) gekoppelt ist; und
- ein mit dem zumindest einen Planetenrad (16) in Wirkverbindung stehendes Hohlrad (18a),
wobei ein erstes Stirnrad (30a) vorgesehen ist, welches mit dem Hohlrad (18a) in Wirkverbindung steht und über eine zweite Eingangswelle (26b) mit einem zweiten Hydromotor (28b) koppelbar ist.

## Beschreibung

Die Erfindung betrifft eine Getriebevorrichtung für ein Fahrzeug, insbesondere ein Landfahrzeug, eine selbstfahrende Arbeitsmaschine oder dergleichen, mit einem Planetengetriebe.

Bei verschiedenen Fahrzeugtypen, insbesondere bei im Baugewerbe oder in der Land- oder Forstwirtschaft verwendeten Zugmaschinen, Kombinationsfahrzeugen, selbstfahrenden Arbeitsmaschinen oder dergleichen, ist es erforderlich, eine möglichst breite Getriebespreizung zu gewährleisten, um den unterschiedlichen Betriebsanforderungen dieser Fahrzeuge Rechnung tragen zu können. Dazu zählt insbesondere das Erfordernis, die Fahrzeuge in mindestens zwei deutlich voneinander verschiedenen Geschwindigkeitsbereichen bewegen zu können. So müssen derartige Fahrzeuge einerseits mit möglichst hoher Zugkraft bei langsamer Fahrt, beispielsweise 2 km/h während des Bearbeitens eines Feldes oder bei Fahrten in schwerem Gelände, betrieben werden können. Andererseits müssen die Fahrzeuge beim Überstellen zum jeweiligen Einsatzort Geschwindigkeiten von 30 bis 40 km/h erreichen, um auch auf öffentlichen Straßen bewegt werden zu können.

Zur Lösung dieser Problematik sind Getriebevorrichtungen bekannt, welche mehrere Eingangswellen umfassen und dadurch mit mehreren Hydromotoren koppelbar sind. Eine derartige Getriebevorrichtung ist beispielsweise bereits aus der DE 43 07 616 A1 zu entnehmen, welche zwei Antriebswellen umfasst. Beide Antriebswellen sind jeweils mit einem Hydromotor koppelbar und treiben über zwei miteinander kämmende Stirnräder eine zentrale Antriebswelle an. Die Antriebswelle treibt wiederum über zwei miteinander in Wirkverbindung stehenden Planetengetrieben ein Abtriebselement an, welches als Turas, Rad oder Winde ausgebildet ist. Durch gezieltes Zu- und Abschalten der einzelnen Hydromotoren werden unterschiedlichen Geschwindigkeitsbereiche erreicht.

Als nachteilig an dieser bekannten Getriebevorrichtung ist dabei der Umstand anzusehen, dass diese konstruktiv vergleichsweise aufwendig ausgebildet ist und nur eine geringe Getriebespreizung zulässt.

Aufgabe der vorliegenden Erfindung ist es daher, eine Getriebevorrichtung der eingangs genannten Art zu schaffen, welche einen konstruktiv einfacheren Aufbau mit einer erhöhten Getriebespreizung gewährleistet.

Diese Aufgabe wird erfindungsgemäß durch eine Getriebevorrichtung mit den Merkmalen des Patentanspruchs 1 gelöst.

Vorteilhafte Ausgestaltungen mit zweckmäßigen und nicht-trivialen Weiterbildungen der Erfindung sind in den Unteransprüchen angegeben.

Um eine Getriebevorrichtung mit einem konstruktiv einfacheren Aufbau und einer erhöhten Getriebespreizung zu schaffen, ist es erfindungsgemäß vorgesehen, dass die Getriebevorrichtung ein Planetengetriebe umfasst, welches zumindest ein Sonnenrad, das über eine erste Eingangswelle mit einem ersten Hydromotor koppelbar ist, einen Steg, welcher mit einer Abtriebswelle gekoppelt ist, zumindest ein mit dem Sonnenrad in Wirkverbindung stehendes Planetenrad, welches mit dem Steg gekoppelt ist sowie ein mit dem zumindest einen Planetenrad in Wirkverbindung stehendes Hohlrad umfasst, wobei zusätzlich ein erstes Stirnrad vorgesehen ist, welches mit dem Hohlrad in Wirkverbindung steht und über eine zweite Eingangswelle mit einem zweiten Hydromotor koppelbar ist. Die erfindungsgemäße Getriebevorrichtung umfasst demnach - im Gegensatz zum Stand der Technik - lediglich ein Planetengetriebe und kann dadurch einfacher, kompakter und bauraumsparender ausgebildet werden. Darüber hinaus ermöglicht die erfindungsgemäße Getriebevorrichtung eine erhöhte Getriebespreizung, da nicht nur das Sonnenrad sondern auch das Hohlrad antreibbar sind. Zudem erlaubt die Getriebevorrichtung Schaltvorgänge ohne Zugkraftunterbrechung, was beispielsweise beim Einsatz von Fahrzeugen in schwerem Gelände oder mit hoher Beladung von besonderer Bedeutung ist.

In einer vorteilhaften Ausgestaltung der Erfindung ist ein Stirnrad vorgesehen, welches mit dem Hohlrad gekoppelt ist und mit dem ersten Stirnrad in Wirkverbindung steht. Dies erlaubt unter Beibehaltung der bauraumsparenden Konstruktion eine konstruktiv vorteilhafte Möglichkeit, das gewünschte Übersetzungsverhältnis des zweiten Hydromotors an unterschiedliche Anforderungsprofile oder unterschiedliche Fahrzeugtypen anzupassen. Das Verzahnungsverhältnis zwischen Stirnrad und erstem Stirnrad kann variabel eingestellt werden, ohne dass das Planetengetriebe der Getriebevorrichtung an sich geändert werden müsste. Durch den hohen Anteil von Gleichteilen können daher weitere Kostensenkungen erzielt werden.

Eine konstruktiv vorteilhafte und flexible Ausgestaltung der Getriebevorrichtung an unterschiedliche Fahrzeugtypen wird weiterhin dadurch erzielt, dass der Abtriebswelle eine Abtriebsstufe zugeordnet ist, über welche eine Vorderachse und/oder eine Hinterachse des Fahrzeugs anzutreiben ist. Durch eine derartige Abtriebsstufe kann sowohl die gewünschte Endübersetzung als auch die jeweilige Antriebsart den jeweiligen Erfordernissen und baulichen Gegebenheiten angepasst werden.

In einer weiteren vorteilhaften Ausgestaltung der Erfindung ist vorgesehen, dass die erste und die zweite Eingangswelle achsparallel zueinander und/oder gemeinsam auf einer der Abtriebswelle gegenüberliegenden Seite der Getriebevorrichtung angeordnet sind. Dadurch kann die Getriebevorrichtung mit den Hydromotoren gekoppelt und in den vorhandenen Bauraum integriert werden.

In einer weiteren vorteilhaften Ausgestaltung der Erfindung ist eine Bremsvorrichtung, insbesondere eine Lamellenbremse, vorgesehen, mittels welcher das Hohlrad lösbar festzulegen ist. Dies stellt ein besonders materialschonendes und wartungsfreundliches Mittel zum Festlegen des Hohlrads bzw. des damit koppelbaren zweiten Hydromotors dar, wodurch unterschiedliche Drehzahlbereiche bzw. Drehmomentstufen erreicht werden können.

In weiterer vorteilhafter Ausgestaltung wird eine zusätzliche Fahrstufe dadurch bereitgestellt, dass der ersten Eingangswelle ein zweites Stirnrad und der zweiten Eingangswelle ein drittes Stirnrad zugeordnet ist, wobei das zweite und das dritte Stirnrad miteinander in Wirkverbindung stehen. Auf diese Weise können der erste und der zweite Hydromotor mittels der beiden Stirnräder zusammengeschaltet werden und gemeinsam auf das Sonnenrad eintreiben. Durch geeignete Wahl der jeweiligen Verzahnungen des zweiten und dritten Stirnrads kann zusätzlich eine besonders einfache Anpassung der Getriebevorrichtung an die Erfordernisse des jeweiligen Fahrzeugs vorgenommen werden. Dabei hat es sich weiterhin als vorteilhaft gezeigt, dass das erste und/oder das dritte Stirnrad auf der zweiten Welle gelagert sind. Dies ermöglicht das gezielte Entkoppeln des ersten und/oder dritten Stirnrads von der zweiten Antriebswelle, so dass eine etwaige Beschädigung der Getriebevorrichtung beim fahrstufenabhängigen Festlegen unterschiedlicher Elemente des Planetengetriebes verhindert wird.

In einer weiteren vorteilhaften Ausgestaltung der Erfindung ist vorgesehen, dass das zweite Stirnrad auf der ersten Eingangswelle vor dem Sonnenrad und/oder das dritte Stirnrad auf der zweiten Eingangswelle vor dem ersten Stirnrad angeordnet ist. Mit anderen Worten sind das zweite und/oder das dritte Stirnrad zwischen den Kopplungsbereichen ihrer jeweiligen Eingangswellen mit den Hydromotoren und dem Planetengetriebe angeordnet. Dies ermöglicht einen kostensenkenden, modularen Aufbau der Getriebevorrichtung, bei dem lediglich die jeweils gewünschten Stirnräder auf den Eingangswellen des Planetengetriebes angeordnet werden müssen.

Um eine Getriebevorrichtung mit mehreren Fahrstufen bereitstellen zu können, hat es sich als vorteilhaft gezeigt, dass eine erste Kupplungseinrichtung, insbesondere eine Klauen- und/oder Lamellenkupplung, vorgesehen ist, mittels welcher das erste und/oder das dritte Stirnrad von der zweiten Antriebswelle zu entkoppeln ist. Dadurch kann die zweite Antriebswelle bzw. der zweite Hydromotor in Abhängigkeit der Fahrsituation besonders einfach in den Antriebsstrang ein- oder aus diesem ausgekoppelt werden.

In einer weiteren vorteilhaften Ausgestaltung der Erfindung ist eine zweite Kupplungseinrichtung, insbesondere eine Klauen- und/oder Lamellenkupplung, vorgesehen, mittels welcher das Hohlrad lösbar festgelegt und/oder mit dem Steg gekoppelt werden kann. Durch eine derartige Kupplungseinrichtung kann zum einen eine zusätzliche Fahrstufe bereitgestellt werden, zum anderen entfällt die Notwendigkeit, eine zusätzliche Bremsvorrichtung vorsehen zu müssen. So kann in einfachster Ausgestaltung beispielsweise das Hohlrad des Planetengetriebes mittels der Kupplungseinrichtung an einer zugeordneten Gehäusewand der Getriebevorrichtung festgelegt werden. Dabei hat es sich ebenfalls als vorteilhaft gezeigt, dass die zweite Kupplungseinrichtung eine Leerlaufstellung umfasst.

Besonders einfach und komfortabel kann ein Wechsel zwischen verschiedenen Fahrstufen oder Betriebszuständen der Getriebevorrichtung mit Hilfe einer zugeordneten Steuereinrichtung erfolgen, mittels welcher der erste Hydromotor und/oder der zweite Hydromotor und/oder ggf. die Bremsvorrichtung und/oder ggf. die erste Kupplungseinrichtung und/oder ggf. die zweite Kupplungseinrichtung zu steuern ist. In Abhängigkeit der konkreten Ausgestaltung der Getriebevorrichtung können die besagten Elemente zum Wechseln der Fahrstufe koordiniert und zentral gesteuert werden, so dass beispielsweise die Getriebevorrichtung als Lastschaltgetriebe ohne Zugkraftunterbrechung während der Schaltvorgänge ausgebildet werden kann.

Weitere Vorteile, Merkmale und Einzelheiten der Erfindung ergeben sich aus der nachfolgenden Beschreibung mehrerer Ausführungsbeispiele sowie anhand der Zeichnungen, in welchen gleiche oder funktionsgleiche Elemente mit gleichen Bezugszeichen versehen sind. Dabei zeigen:
- Fig. 1: eine schematische Darstellung eines ersten Ausführungsbeispiels der Getriebevorrichtung mit einer Fahrstufe;
- Fig. 2: eine schematische Darstellung eines zweiten Ausführungsbeispiels der Getriebevorrichtung mit zwei Fahrstufen; und
- Fig 3: eine schematische Darstellung eines dritten Ausführungsbeispiels der Getriebevorrichtung mit drei Fahrstufen.

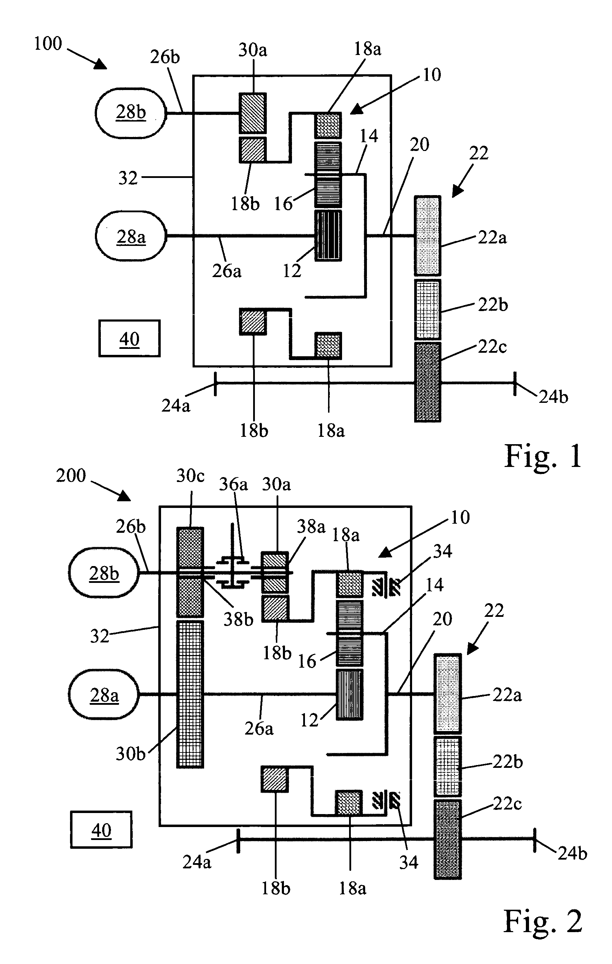

Fig. 1 zeigt eine schematische Darstellung eines ersten Ausführungsbeispiels der Getriebevorrichtung 100 für ein Fahrzeug (nicht abgebildet) mit einer Fahrstufe. Die Getriebevorrichtung 100 umfasst dabei ein Planetengetriebe 10 mit einem Sonnenrad 12, einem Steg 14, welcher mit einer Mehrzahl von Planetenrädern 16 gekoppelt ist, sowie einem Hohlrad 18a. Das Planetengetriebe 10 umfasst im vorliegenden Fall drei Planetenräder 16 (nur ein Planetenrad abgebildet), welche drehbar auf dem Steg 14 gelagert sind und besitzt die einstellbare Standübersetzung i₀. Es ist jedoch zu betonen, dass auch eine davon abweichende Anzahl an Planetenräder 16 vorgesehen sein kann. Der Steg 14 ist mit einer Abtriebswelle 20 gekoppelt, welche ihrerseits über eine Abtriebsstufe 22 mit vorliegend drei paarweise in Wirkverbindung stehenden Zahnrädern 22a-c zwei Kardanflansche 24a,b bewegt, über welche eine Hinterachse bzw. Vorderachse des Fahrzeugs angetrieben werden kann. Durch geeignete Wahl der Verzahnungen der drei Zahnräder 22a-c kann dabei besonders einfach die für das jeweilige Fahrzeug gewünschte Endübersetzung eingestellt werden. Denkbar sind dabei jedoch auch alternative Ausgestaltungen der Abtriebsstufe 22 sowie die Verwendung einer abweichenden Anzahl von Zahnrädern 22a-c.

Das Sonnenrad 12 ist über eine erste Eingangswelle 26a mit einem ersten Hydromotor 28a gekoppelt und kann durch diesen angetrieben werden. Mit dem Hohlrad 18a ist ein Stirnrad 18b verbunden, welches gegenüber dem Hohlrad 18a einen verringerten Durchmesser aufweist. Das Stirnrad 18b steht im Eingriff mit einem ersten Stirnrad 30a, welches über eine zweite Eingangswelle 26b mit einem zweiten Hydromotor 28b gekoppelt ist und von diesem angetrieben werden kann. Als im Rahmen der Erfindung mitoffenbart ist es dabei anzusehen, dass das Hohlrad 18a mit dem Stirnrad 18b gekoppelt ist. Es kann sich dabei um eine einteilige oder mehrteilige Ausgestaltung handeln. Die Getriebevorrichtung 100 ist vorliegend in einem Gehäuse 32 angeordnet, welches die enthaltenen mechanischen Elemente vor Verschmutzung oder Beschädigung schützt. Zusätzlich ist eine Steuereinrichtung 40 vorgesehen, die im vorliegenden Ausführungsbeispiel die Hydromotoren 28a,b steuert.

Die Funktionsweise des vorliegenden Ausführungsbeispiels wird im Folgenden näher erläutert. Zum Anfahren des Fahrzeugs triebt der erste Hydromotor 28a mit einem Drehmoment T₁ das Sonnenrad 12 des Planetengetriebes 10 an, dessen Hohlrad 18a über das mit dem Stirnrad 18b gekoppelte erste Stirnrad 30a vom zweiten Hydromotor 28b gehalten wird. Dazu wird über das erste Stirnrad 30a das Drehmoment T₂ des zweiten Hydromotors 28b an das erforderliche Abstützmoment i₀*T₁ des Hohlrads 18a angeglichen. Der Abtrieb des Planetengetriebes 10 über die Abtriebswelle 20 bzw. die Abtriebsstufe 22 erfolgt am Steg 14.

Nach dem Anfahren des Fahrzeugs wird der zweite Hydromotor 28b zugeschaltet. Dadurch drehen sich das Hohlrad 18a sowie das Stirnrad 18b im gleichen Drehsinn wie das Sonnenrad 12 und erhöhen stufenlos die Enddrehzahl und damit die Geschwindigkeit. Die Gesamtübersetzung ist variabel über die Wahl der einzelnen Verzahnungspaare und über die Abtriebsstufe 22 einstellbar. Durch den Verzicht auf Schaltelemente kann die vorliegende Ausführungsform einerseits besonders kostengünstig und kompakt ausgebildet werden, bietet andererseits aber trotzdem eine für die meisten Anwendungsbereiche ausreichende Getriebespreizung, wobei die stufenlose Erweiterung des Drehzahlbereichs darüber hinaus ohne Zugkraftunterbrechung erfolgt. Im Vergleich zu aus dem Stand der Technik bekannten Getriebevorrichtungen bzw. Fahrzeugen mit nur einem Hydromotor kann eine deutlich höhere Endgeschwindigkeit erzielt werden.

Fig. 2 zeigt eine schematische Darstellung eines zweiten Ausführungsbeispiels der Getriebevorrichtung 200 mit zwei Fahrstufen. Dabei ist der prinzipielle Aufbau bereits aus der Beschreibung zu Fig. 1 zu entnehmen. Das vorliegende Ausführungsbeispiel umfasst zusätzlich eine Bremsvorrichtung 34, mittels welcher das Hohlrad 18a lösbar festzulegen ist. Die Bremsvorrichtung 34 ist beispielsweise als Lamellenbremse ausgebildet, dem Fachmann sind jedoch auch alternative Ausgestaltungen geläufig. Weiterhin ist zwischen dem ersten Hydromotor 28a und dem Sonnenrad 12 ein zweites Stirnrad 30b angeordnet, welches mit einem zwischen dem zweiten Hydromotor 28b und dem ersten Stirnrad 30a angeordneten dritten Stirnrad 30c kämmt. Zwischen dem ersten und dem dritten Stirnrad 30a,c ist eine erste Kupplungseinrichtung 36a angeordnet, deren Funktionsweise im Folgenden noch näher erläutert wird. Die Kupplungseinrichtung 36a kann dabei beispielsweise als Klauen- oder Lamellenkupplung ausgebildet sein. Das erste und das dritte Stirnrad 30a,c umfassen zusätzlich Wälzlager 38a,b auf der zweiten Welle. Schließlich umfasst die Getriebevorrichtung 200 noch eine Steuereinrichtung 40, welche die beiden Hydromotoren 28a,b sowie die Schaltvorgänge zwischen den Fahrstufen steuert.

In der ersten Fahrstufe koppelt die Kupplungseinrichtung 36a die zweite Eingangswelle 26b mit dem dritten Stirnrad 30c. Das Hohlrad 18a und das über das Stirnrad 18b mit diesen verbundene erste Stirnrad 30a werden mittels der Bremsvorrichtung 34 am Gehäuse 32 festgelegt. Die beiden Hydromotoren 28a,b treiben gemeinsam über das zweite und dritte Stirnrad 30b,c das Sonnenrad 12 des Planetengetriebes 10 an. Der Abtrieb erfolgt wie zuvor über den Steg 14 und die Abtriebswelle 20 auf die Abtriebsstufe 22. Die Gesamtübersetzung ergibt sich damit zu i_{ges}=(i₀+1)*i_{A}, wobei i_{A} die Übersetzung des Abtriebs bezeichnet.

In der zweiten Fahrstufe koppelt die Kupplungseinrichtung 36a die zweite Eingangswelle 26b mit dem ersten Stirnrad 30a, so dass sich das dritte Stirnrad 30c über das Lager 38b in einer Freilaufstellung befindet. Gleichzeitig ist die Bremsvorrichtung 34 geöffnet und gibt damit das Hohlrad 18a bzw. das Stirnrad 18b frei. Die Funktion entspricht damit der aus Fig. 1 bekannten Ausführungsform. Auch hier kann die gewünschte Endübersetzung nach Wunsch angepasst werden.

Zum Schalten aus der ersten in die zweite Fahrstufe schaltet die Steuereinrichtung 40 die erste Kupplungseinrichtung 36a in Leerlaufstellung und bringt den zweiten Hydromotor 28b zum Stillstand. Im nächsten Schritt wird die Bremsvorrichtung 34 geöffnet und das Hohlrad 18a über das Stirnrad 18b und das erste Stirnrad 30a vom Abstützmoment T₂ des zweiten Hydromotors 28b gehalten. Während des Schaltvorgangs erfolgt der Antrieb nur durch den ersten Hydromotor 28a. Die Betätigung der einzelnen Schaltelemente muss beim Hochschalten nicht synchronisiert werden, so dass eine einfache Schaltstellungsüberwachung durch die Steuereinrichtung 40 ausreichend ist.

Zum Schalten aus der zweiten in die erste Fahrstufe bringt die Steuereinrichtung 40 zunächst den zweiten Hydromotor 28b zum Stillstand und legt das Hohlrad 18a mittels der Bremsvorrichtung 34 fest. Nach dem Stillstand des Hohlrads 18a und des ersten Stirnrads 30a wird die Kupplungseinrichtung 36a in eine Leerlaufstellung gebracht. In dieser Zeit erfolgt der Antrieb nur über den ersten Hydromotor 28a. Der zweite Hydromotor 28b wird auf die Drehzahl des dritten Stirnrads 30c synchronisiert und anschließend über die Kupplungseinrichtung 36a an dieses angekoppelt. Der Antrieb erfolgt damit wieder mit beiden Hydromotoren 28a,b auf das Sonnenrad 12 des Planetengetriebes 10. Der Wechsel der Fahrstufen erfolgt jeweils ohne Zugkraftunterbrechung.

Durch die beiden Fahrstufen kann der Übersetzungsbereich der Getriebevorrichtung 100 gemäß dem ersten Ausführungsbeispiel durch die vorliegende Getriebevorrichtung 200 weiter erhöht werden. Gleichzeitig sind sowohl hohe Anfahrmomente als auch hohe Endgeschwindigkeiten möglich. Dabei kann weiterhin vorgesehen sein, dass bei Leerlaufstellung der Kupplungseinrichtung 36a und festgelegter Bremsvorrichtung 34 der Antrieb auch nur über den ersten Hydromotor 28a erfolgt. Der zweite Hydromotor 28b kann dann lediglich bei Bedarf zugeschaltet werden, um beispielsweise in der ersten Fahrstufe eine Erhöhung des Anfahrmoments oder in der zweiten Fahrstufe eine Erhöhung der Endgeschwindigkeit zu ermöglichen.

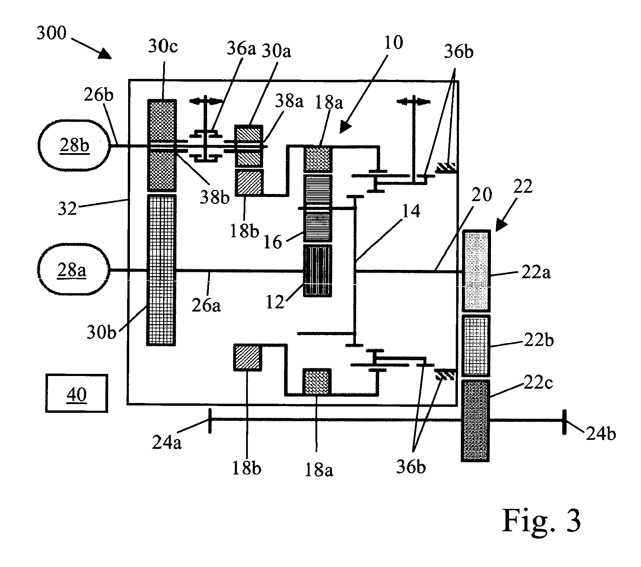

Fig. 3 zeigt eine schematische Darstellung eines dritten Ausführungsbeispiels der Getriebevorrichtung 300 mit drei Fahrstufen. Dabei ist der prinzipielle Aufbau bereits den Beschreibungen zu Fig. 1 bzw. Fig. 2 zu entnehmen. Im Gegensatz zu dem aus Fig. 2 bekannten Ausführungsbeispiel ist hier jedoch keine Bremsvorrichtung 34 vorgesehen. Stattdessen übernimmt eine zweite Kupplungseinrichtung 36b sowohl Kupplungs- als auch Bremsaufgaben. Grundsätzlich können natürlich auch getrennte Kupplungs- und Bremsvorrichtungen vorgesehen sein.

In der ersten Fahrstufe koppelt die erste Kupplungseinrichtung 36a die zweite Eingangswelle 26b mit dem dritten Stirnrad 30c. Das Hohlrad 18a des Planetengetriebes 10 und das mit diesem über das Stirnrad 18b in Wirkverbindung stehende erste Stirnrad 30a werden mittels der zweiten Kupplungseinrichtung 30b am Gehäuse 32 festgelegt. Die beiden Hydromotoren 28a,b treiben gemeinsam das Sonnenrad 12 an. Der Abtrieb erfolgt wie zuvor über den Steg 14 und die Abtriebswelle 20 auf die Abtriebsstufe 22. Dies entspricht der aus Fig. 2 bekannten ersten Fahrstufe. Die Gesamtübersetzung ergibt sich daher analog zu i_{ges}=(i₀+1)*i_{A}.

In der zweiten Fahrstufe koppelt die erste Kupplungseinrichtung 36a die zweite Eingangswelle 26b mit dem ersten Stirnrad 30a, wodurch sich das dritte Stirnrad 30c über das Lager 38b in einer Leerlaufstellung befindet. Die zweite Kupplungseinrichtung 36b ist ebenfalls in Leerlaufstellung geschaltet und erlaubt die Drehung des Hohlrads 18a sowie des Stirnrads 18b. Die Funktionsweise entspricht damit dem ersten Ausführungsbeispiel bzw. der zweiten Fahrstufe des zweiten Ausführungsbeispiels.

In der dritten Fahrstufe ist die zweite Kupplungseinrichtung 36b mit dem Steg 14 gekoppelt. Das Planetengetriebe 10 ist damit blockiert und läuft als Block um. Die erste Kupplungseinrichtung 36a befindet sich dabei in Leerlaufstellung und der zweite Hydromotor 28b ist stillgelegt. Der Antrieb erfolgt daher über den ersten Hydromotor 28a direkt auf die Abtriebsstufe 22. Die Gesamtübersetzung ist nur von der Abtriebsstufe 22 abhängig und ergibt sich zu i_{ges}=i_{A}.

Zum Schalten aus der ersten in die zweite Fahrstufe wird zunächst die erste Kupplungseinrichtung 36a in Leerlaufstellung geschaltet und der zweite Hydromotor 28b zum Stillstand gebracht. Anschließend wird die zweite Kupplungseinrichtung 36b in Leerlaufstellung geschaltet und gibt dadurch das Hohlrad 18a sowie das Stirnrad 18b frei. Das erforderliche Abstützmoment T₂ wird dabei über das erste Stirnrad 30a vom zweiten Hydromotor 28b aufgebracht. Während des Schaltvorgangs erfolgt der Antrieb über den ersten Hydromotor 28a.

Zum Schalten aus der zweiten in die dritte Fahrstufe werden die Hydromotoren 28a,b so gesteuert, dass bei Synchronlauf in der Kupplungseinrichtung 36b das Hohlrad 18a mit dem gleichschnell drehenden Steg 14 des Planetengetriebes 10 gekoppelt wird. Anschließend wird die erste Kupplungseinrichtung 36a in Leerlaufstellung gebracht und der zweite Hydromotor 28b stillgelegt.

Zum Zurückschalten aus der dritten in die zweite Fahrstufe wir der zweite Hydromotor 28b so gesteuert, dass er bei Synchronlauf in der ersten Kupplungseinrichtung 36a an das erste Stirnrad 30a gekoppelt wird. Anschließend wird die zweite Kupplungseinrichtung 36b in Leerlaufstellung gebracht und ermöglicht die freie Überlagerung der Drehzahlen des Hohlrads 18a bzw. des Stirnrads 18b und des Sonnenrads 12.

Zum Zurückschalten aus der zweiten in die erste Fahrstufe wird der zweite Hydromotor 28b zum Stillstand gebremst und das Hohlrad 18a mit der zweiten Kupplungseinrichtung 36b am Gehäuse 32 festgelegt. Nach dem Stillstand des Hohlrads 18a und des ersten Stirnrads 30a wir die erste Kupplungseinrichtung 36a in Leerlaufstellung gebracht. Währenddessen erfolgt der Antrieb nur durch den ersten Hydromotor 28a. Der zweite Hydromotor 28b wird auf die Drehzahl des dritten Stirnrads 30c synchronisiert und anschließend über die erste Kupplungseinrichtung 36a an das rotierende dritte Stirnrad 30c gekoppelt. Der Antrieb erfolgt jetzt wieder mit beiden Hydromotoren 28a,b auf das Sonnenrad 12 des Planetengetriebes 10.

Durch die dritte Fahrstufe werden die Übersetzungsbereiche der vorherigen Getriebevorrichtungen 100, 200 weiter erhöht und ermöglicht neben hohen Anfahrmomenten sehr hohe Endgeschwindigkeiten. Auch hier erfolgen alle Schaltvorgänge ohne Zugkraftunterbrechung.

## Patentansprüche

1. Getriebevorrichtung (100, 200, 300) für ein Fahrzeug, insbesondere ein Landfahrzeug, eine selbstfahrende Arbeitsmaschine oder dergleichen, mit einem Planetengetriebe (10), welches zumindest folgende Elemente umfasst:
- ein Sonnenrad (12), welches über eine erste Eingangswelle (26a) mit einem ersten Hydromotor (28a) koppelbar ist;
- einen Steg (14), welcher mit einer Abtriebswelle (20) gekoppelt ist;
- zumindest ein mit dem Sonnenrad (12) in Wirkverbindung stehendes Planetenrad (16) , welches mit dem Steg (14) gekoppelt ist; und
- ein mit dem zumindest einen Planetenrad (16) in Wirkverbindung stehendes Hohlrad (18a),
wobei ein erstes Stirnrad (30a) vorgesehen ist, welches mit dem Hohlrad (18a) in Wirkverbindung steht und über eine zweite Eingangswelle (26b) mit einem zweiten Hydromotor (28b) koppelbar ist.

2. Getriebevorrichtung nach Anspruch 1,
**dadurch gekennzeichnet,**
**dass** ein Stirnrad (18b) vorgesehen ist, welches mit dem Hohlrad (18a) gekoppelt ist und mit dem ersten Stirnrad (30a) in Wirkverbindung steht.

3. Getriebevorrichtung nach Anspruch 1 oder 2,
**dadurch gekennzeichnet,**
**dass** der Abtriebswelle (20) eine Abtriebsstufe (22) zugeordnet ist, über weiche eine Vorderachse und/oder eine Hinterachse des Fahrzeugs anzutreiben ist.

4. Getriebevorrichtung nach einem der Ansprüche 1 bis 3,
**dadurch gekennzeichnet,**
**dass** die erste und die zweite Eingangswelle (26a,b) achsparallel zueinander und/oder gemeinsam auf einer der Abtriebswelle (20) gegenüberliegenden Seite der Getriebevorrichtung (100, 200, 300) angeordnet sind.

5. Getriebevorrichtung nach einem der Ansprüche 1 bis 4,
**dadurch gekennzeichnet,**
**dass** eine Bremsvorrichtung (34), insbesondere eine Lamellenbremse, vorgesehen ist, mittels welcher das Hohlrad (18a) lösbar festzulegen ist.

6. Getriebevorrichtung nach einem der Ansprüche 1 bis 5,
**dadurch gekennzeichnet,**
**dass** der ersten Eingangswelle (26a) ein zweites Stirnrad (30b) und der zweiten Eingangswelle (26b) ein drittes Stirnrad (30c) zugeordnet ist, wobei das zweite und das dritte Stirnrad (30b,c) miteinander in Wirkverbindung stehen.

7. Getriebevorrichtung nach Anspruch 6,
**dadurch gekennzeichnet,**
**dass** das erste und/oder das dritte Stirnrad (30a,c) ein Lager (38a,b) umfassen.

8. Getriebevorrichtung nach Anspruch 6 oder 7,
**dadurch gekennzeichnet,**
**dass** das zweite Stirnrad (30b) auf der ersten Eingangswelle (26a) vor dem Sonnenrad (12) und/oder das dritte Stirnrad (30c) auf der zweiten Eingangswelle (26b) vor dem ersten Stirnrad (30a) angeordnet ist.

9. Getriebevorrichtung nach einem der Ansprüche 6 bis 8,
**dadurch gekennzeichnet,**
**dass** eine erste Kupplungseinrichtung (36a), insbesondere eine Klauen- und/oder Lamellenkupplung, vorgesehen ist, mittels welcher das erste und/oder das dritte Stirnrad (30a,c) von der zweiten Antriebswelle (26b) zu entkoppeln ist.

10. Getriebevorrichtung nach einem der Ansprüche 1 bis 9,
**dadurch gekennzeichnet,**
**dass** eine zweite Kupplungseinrichtung (36b), insbesondere eine Klauen- und/oder Lamellenkupplung, vorgesehen ist, mittels welcher das Hohlrad (18a) lösbar festzulegen und/oder mit dem Steg (14) zu koppeln ist.

11. Getriebevorrichtung nach Anspruch 10,
**dadurch gekennzeichnet,**
**dass** die zweite Kupplungseinrichtung (36b) eine Leerlaufstellung umfasst.

12. Getriebevorrichtung nach einem der Ansprüche 1 bis 11,
**dadurch gekennzeichnet,**
**dass** eine Steuereinrichtung (40) vorgesehen ist, mittels welcher der erste Hydromotor (28a) und/oder der zweite Hydromotor (28b) und/oder ggf. die Bremsvorrichtung (34) und/oder ggf. die erste Kupplungseinrichtung (36a) und/oder ggf. die zweite Kupplungseinrichtung (36b) zu steuern ist.
